# FASCICULE DE BREVET EUROPEEN

(11) **EP 4 271 614 B1**
(45) Date de publication et mention de la délivrance du brevet: **06.11.2024**
(21) Numéro de dépôt: 21854680.2
(22) Date de dépôt: 27.12.2021
(51) Int. Cl.: B64F 1/02

(54) **BARRIÈRE D'ARRÊT POUR AÉRONEF**
STOPPBARRIERE FÜR EIN FLUGZEUG
STOP BARRIER FOR AN AIRCRAFT

(30) Priorité: 29.12.2020 FR 2014048
(43) Date de publication de la demande: 08.11.2023
(73) Titulaire: Curtiss-Wright Arresting Systems SAS, 16100 Merpins (FR)
(72) Inventeur: MOSCATO, Jean-Pierre, 77550 Moissy-Cramayel (FR); RYAN, Paul, 77550 Moissy-Cramayel (FR); BRIELLE, Armand, 77550 Moissy-Cramayel (FR); MILLET, Xavier Christian Marcel, 77550 Moissy-Cramayel (FR)
(74) Mandataire: Regimbeau
(86) Numéro de dépôt international: PCT/FR2021/052458
(87) Numéro de publication internationale: WO 2022/144524

(56) Documents cités:
- WO-A1-89/10302
- DE-B- 1 198 682
- FR-A1- 2 316 483
- FR-A1- 2 360 467
- FR-A1- 2 361 271

## Description

### DOMAINE TECHNIQUE GENERAL

La présente invention concerne une barrière d'arrêt pour un aéronef.

### ETAT DE LA TECHNIQUE

Il est connu selon l'art antérieur de faire usage de barrières d'arrêt en bout de piste d'atterrissage, afin de retenir et de stopper des avions militaires dont un système est défaillant à l'atterrissage ou au décollage.

Toutefois, certains aéronefs sont pourvus d'équipements extérieurs relativement fragiles, de sorte qu'il est important qu'une telle barrière n'exerce pas d'efforts trop importants sur ces zones fragiles, au risque de les détériorer, tout en permettant d'arrêter l'aéronef.

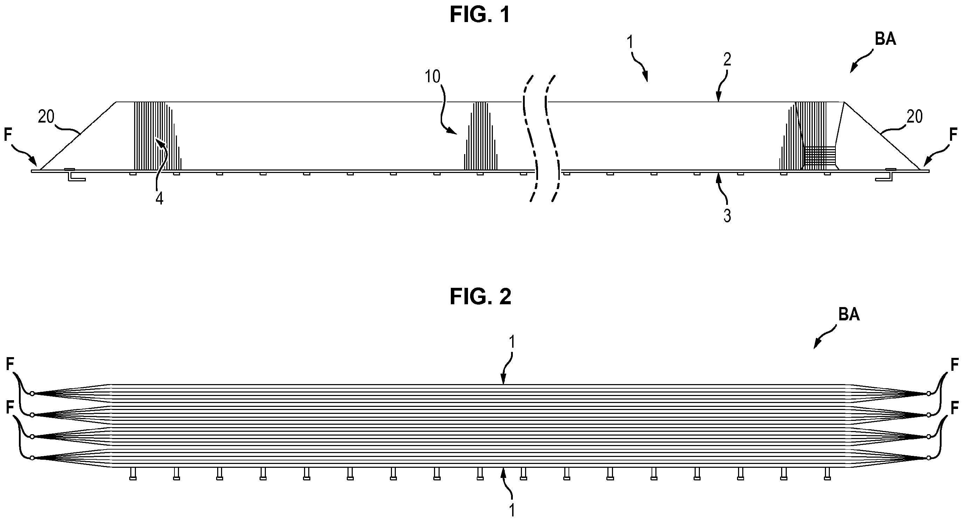

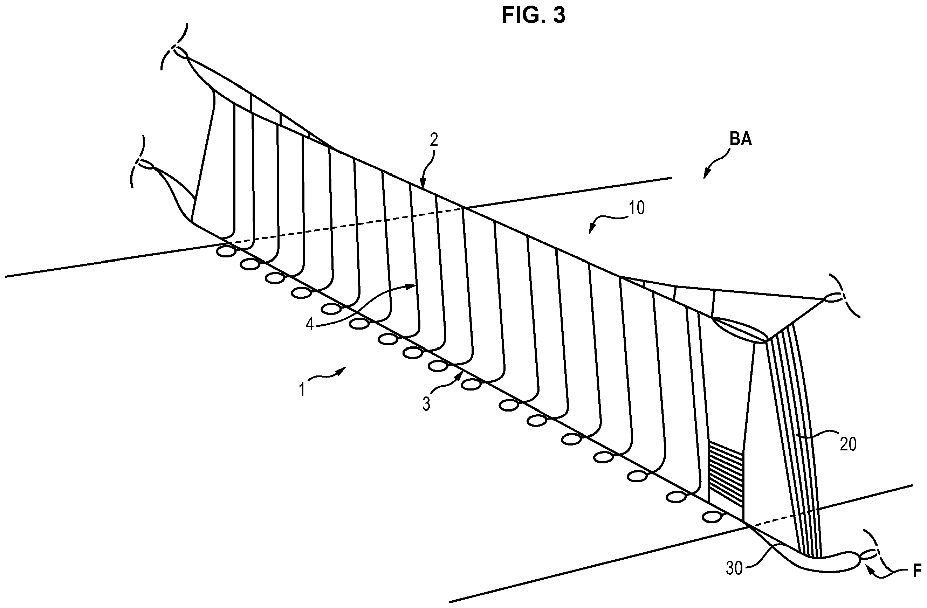

Une telle barrière est généralement constituée comme illustré aux figures 1 à 3 annexées.

Cette barrière BA est constituée ici d'un ensemble de vingt-quatre filets individuels répartis en quatre groupes de six filets élémentaires 1, disposés parallèlement les uns aux autres. Bien entendu, il s'agit d'un exemple purement illustratif, le nombre de filets individuels et de groupes pouvant être différent de celui illustré ici.

Chaque filet élémentaire 1 est globalement constitué d'une sangle supérieure 2 et d'une ou plusieurs sangles inférieures 3 entre lesquelles est agencé un ensemble de bandes 4 formant, à proprement parler, une structure d'arrêt 10 généralement verticale venant en prise avec l'aéronef pour l'arrêter.

Cette structure d'arrêt 10 s'inscrit globalement dans un rectangle dont les grands côtés s'étendent horizontalement. Bien entendu, les sangles supérieure 2 et inférieure(s) 3 présentent une longueur supérieure à celle de la structure d'arrêt 10 du filet 1 proprement dit, de sorte qu'il subsiste de part et d'autre de la structure d'arrêt, des portions 20 et 30 d'extrémité et de raccordement des sangles 2 et 3 à un dispositif de freinage F (non représenté sur les figures) qui est prévu pour absorber l'énergie cinétique de l'aéronef.

Un même dispositif de freinage F équipe une pluralité de groupes, chaque groupe étant composé lui-même d'une pluralité de filets élémentaires 1. En l'occurrence, sur les figures annexées en exemple, un même dispositif de freinage F est commun à quatre groupes de six filets 1.

On notera que sur les figures 1 à 3, on s'est dispensé de représenter des équipements complémentaires de la barrière BA, tels qu'un système de relevage et d'haubanage permettant de maintenir les filets 1 en position verticale, ainsi qu'un système qui permet de regrouper les groupes de filets en extrémité vers le dispositif de freinage F.

Ainsi, lorsqu'un avion s'engage dans la barrière BA, il est en quelque sorte accompagné dans son déplacement par les filets 1, puis immobilisé par ceuxci, tout en étant retenus par le dispositif de freinage F.

Dans le passé, on cherchait à réduire les contraintes dans les sangles de filets pour retarder leur casse dans le cas où les sangles étaient bloquées dans une position sans ne plus pouvoir en changer, et on permettait une meilleure répartition des contraintes sur les surfaces de l'aéronef.

Le document FR2361271 décrit une solution de ce genre. Elle est partiellement illustrée à la figure 4.

Sur cette figure est partiellement représentée une partie de la sangle supérieure 2 qui équipe chaque filet 1. Cette partie est la portion 20, qui se situe entre la structure d'arrêt 10 et le dispositif de freinage F.

Considérons qu'il s'agit de la partie de la sangle 2 qui se situe sur la partie droite du filet 1, quand on considère la figure 1. Toutefois, ce qui est décrit ci-après vaut également pour la partie située à gauche. Il en est de même pour les portions 30 de la /des sangle(s) inférieure(s) 3.

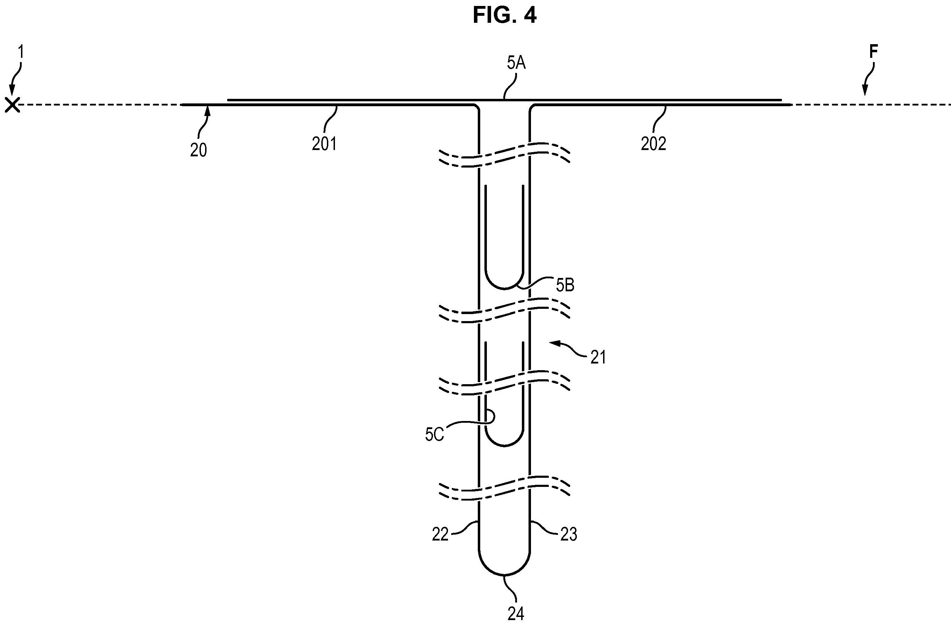

On note sur la figure 4 que la portion de sangle 20 n'est pas complètement en tension entre la structure d'arrêt 10 du filet 1 et le dispositif de freinage S, mais comporte au contraire un tronçon intermédiaire 21, que l'on peut qualifier de « tronçon relâché ». En quelque sorte, ce tronçon relâché 21 « donne du mou » à la sangle 2.

Ce tronçon 21 est représenté ici sous la forme d'un « U », dans un souci de simplification et pour la clarté du propos.

La portion 20 de sangle illustrée ici est donc constituée, du filet 1 en direction du dispositif de freinage F, d'un segment sous tension 201, lequel se poursuit par le tronçon 21 précité, lui-même constitué par deux segments 22 et 23 parallèles réunis par un segment galbé 24. Le tronçon 21 se poursuit par un autre segment sous tension 202, en direction du dispositif de freinage F.

Comme le montre clairement la figure 4, le tronçon 21 est pourvu de trois courtes sangles additionnelles, que l'on peut qualifier d'éléments fusibles.

Ces trois sangles additionnelles sont référencées 5A, 5B et 5C. La première sangle 5A est fixée aux segments 201 et 202 précités, tandis que les sangles 5B et 5C, conformées en « U », sont fixées aux segments 22 et 23.

La fixation est réalisée par tout moyen connu de l'homme du métier tel qu'une couture. Le matériau qui constitue les sangles additionnelles 5A, 5B et 5C peut être le même que celui de la sangle principale 2, ou être différent.

Lorsque le filet élémentaire 1 est soumis à des effets importants, cela provoque en premier lieu la mise sous tension de la sangle 2, laquelle provoque immédiatement la casse des sangles additionnelles 5A à 5C. Le tronçon relâché 21 de la sangle 2 n'est donc plus immobilisé et peut donc être mis sous tension.

Un tel dispositif souffre d'un inconvénient majeur. En effet, on constate que les sangles 5A à 5C ont très souvent un comportement « tout ou rien ». Cela signifie que ces sangles rompent presque toutes en même temps, du fait qu'elles présentent des caractéristiques identiques. Par conséquent, une grande sur-longueur est donnée d'un coup à la sangle 2, ce qui provoque un relâchement non maîtrisé du filet élémentaire 1, avec des endommagements critiques sur les surfaces de l'aéronef lors des surcharges concomitantes des autres filets.

Un état de la technique additionnel est constitué par les documents FR2360467, DE1198682, FR2316483 et WO89/10302.

La présente invention a pour but de résoudre le problème exposé plus haut en proposant une barrière d'arrêt du type évoqué, pour laquelle une sur-longueur de l'une et/ou l'autre des sangles supérieure et inférieure(s) 2 et 3 est libérée de manière progressive.

### PRESENTATION DE L'INVENTION

A cet effet, la présente invention propose une barrière d'arrêt pour un aéronef, qui comporte un ensemble de filets élémentaires disposés parallèlement les uns aux autres, chaque filet élémentaire comprenant une structure d'arrêt généralement verticale qui s'étend entre une première sangle supérieure et au moins une deuxième sangle inférieure, ces première et deuxième sangles comprenant chacune deux portions d'extrémité et de raccordement à un dispositif de freinage, lesdites portions d'extrémité de l'une et/ou l'autre desdites sangle supérieure et inférieure(s) comportant un tronçon intermédiaire relâché , c'est-à-dire qui n'est pas sous tension et qui forme une « sur-longueur », ladite barrière comportant une sangle additionnelle dont les extrémités opposées sont fixées par des moyens de liaison aux extrémités correspondantes dudit tronçon intermédiaire relâché , caractérisée par le fait que ladite sangle additionnelle comprend une région dans laquelle elle est constituée de deux brins distincts et contigus, le fil de liage, c'est-à-dire le fil de trame ou de chaîne de cette sangle additionnelle étant commun auxdits deux brins, la résistance à l'arrachement dudit fil de liage étant inférieure à celle desdits moyens de liaison.

Grâce à ces caractéristiques, une sur-longueur progressive est conférée à l'une et/ou l'autre des sangles supérieure et inférieure(s), ce qui permet de « doser » le mouvement de chaque filet élémentaire de la barrière.

En d'autres termes, chaque filet élémentaire se meut en fonction des sollicitations qu'il subit, et ce sans à-coups, de sorte que le risque de dégâts à la surface de l'aéronef est minoré.

Selon d'autres caractéristiques avantageuses et non limitatives de l'invention, prises seules ou selon une combinaison quelconque techniquement compatible :
- lesdits moyens de liaison comprennent des fils de couture, ou sont formés par collage ou assemblage par soudure à haute fréquence ;
- lesdits fils de couture s'étendent sur une longueur d'au moins 50 millimètres ;
- la longueur totale dudit tronçon intermédiaire relâché est supérieure à la longueur totale de ladite sangle additionnelle lorsque lesdits brins sont séparés.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
la figure 1 est un schéma montrant, de face, une barrière d'arrêt pour aéronef ;
la figure 2 est un schéma de principe de la barrière de la figure 1, vue de dessus ;
la figure 3 est un schéma de principe, en perspective, d'une barrière telle que celle des figures 1 et 2 ;
la figure 4 est un schéma qui a pour but d'illustrer la structure et le fonctionnement d'une solution conforme à l'art antérieur qui équipe certaines barrières d'arrêt et qui permet de répartir les contraintes appliquées par ces dernières sur l'aéronef que l'on cherche à stopper ;
la figure 5 est un schéma analogue à la figure 4, mais montrant une partie de la solution selon l'invention ;
la figure 6 est une vue agrandie de la zone de la figure 5 repérée par un cercle ;
la figure 7 est un schéma simplifié, analogue à celui de la figure 5 ;
la figure 8 est un graphique montrant, en fonction de la tension exercée sur un filet d'une barrière, l'allongement d'une sangle qui l'équipe, et ce conformément à l'art antérieur ;
la figure 9 est un graphique montrant, en fonction de la tension exercée sur un filet d'une barrière, l'allongement d'une sangle qui l'équipe, et ce conformément à la présente invention ;
la figure 10 est un graphique montrant en fonction du temps, d'une part le déplacement de filets individuels qui forment ensemble une barrière d'arrêt conforme à l'invention et, d'autre part, la somme des forces d'appui des filets sur un aéronef.

### DESCRIPTION DETAILLEE DE L'INVENTION

La présente invention s'applique à une barrière BA telle que celle décrite plus haut. Par conséquent, ce qui a été décrit précédemment en relation avec les figures 1 à 3 vaut également pour ce qui suit.

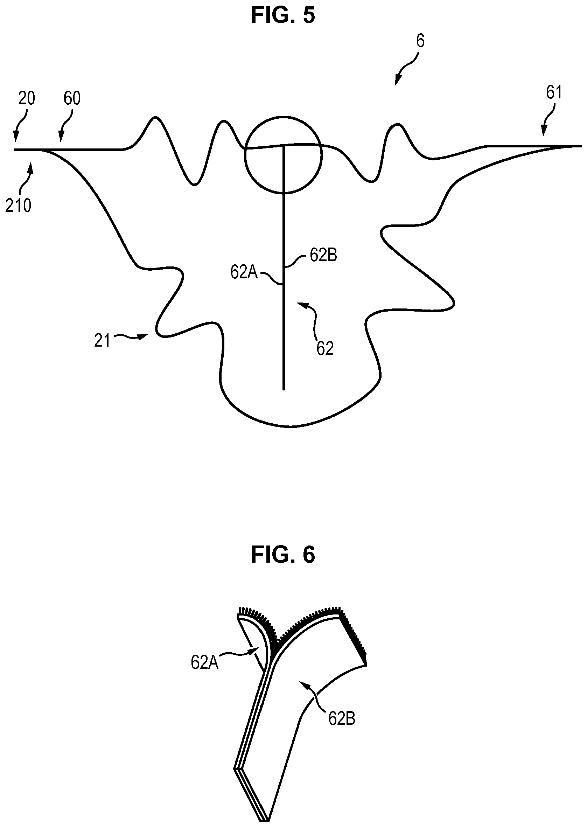

La spécificité de la barrière selon l'invention fait l'objet des figures 5 à 7 annexées.

Comme à la figure 4 précitée, on s'intéresse ici à l'une des portions 20 d'extrémité de la sangle supérieure 2, étant entendu que ce qui est précisé ci-après vaut également pour la seconde portion d'extrémité de cette sangle 2, voire pour les portions d'extrémité 30 de la /des sangle(s) inférieure(s) 3.

La portion 20 illustrée comporte donc un tronçon intermédiaire relâché 21, c'est-à-dire qui n'est pas sous tension en période de non utilisation de la barrière.

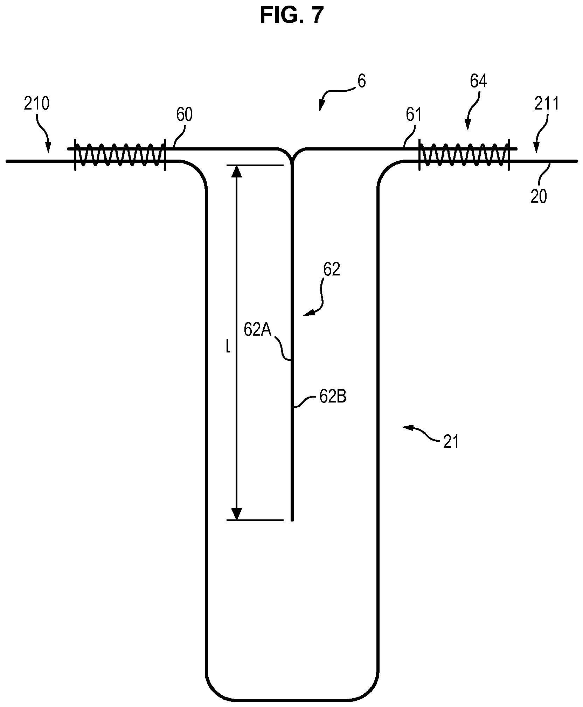

Conformément à l'invention, on a affaire à une sangle additionnelle 6 dont les extrémités opposées 60 et 61 sont fixées par des moyens de liaison 64 (voir figure 7) aux extrémités correspondantes 210 et 211 dudit tronçon intermédiaire relâché 21.

Avantageusement, ces moyens de liaison 64, qui peuvent consister par exemple en des fils de couture, s'étendent préférentiellement sur 50 à 200 millimètres. On peut bien entendu faire usage d'autre techniques de liaison telles que le collage, un assemblage par soudure à haute fréquence, etc.

Toujours selon une caractéristique de l'invention, cette sangle additionnelle 6 peut comprendre une région 62, située de préférence à mi-distance de ses extrémités 60 et 61, qui est constituée de deux brins 62A et 62B, formant en quelque sorte des sangles élémentaires distinctes et contiguës, assemblées l'une à l'autre. Exprimé autrement, la sangle 6 est formée de deux sangles élémentaires 62A et 62B qui sont liées l'une à l'autre dans la région 62 où elles sont contiguës.

La particularité de ces deux brins (ou sangles élémentaires) 62A et 62B est que le fil de liage, c'est-à-dire le fil de chaîne ou le fil de trame qui les relie dans la région 62 est commun. Ils sont en quelque sorte imbriqués l'un dans l'autre. Cette imbrication est préférentiellement réalisée au cours du tissage de la sangle 6. On peut qualifier ce type de sangle additionnelle de « sangle à déchirure ».

Conformément à l'invention, la résistance à l'arrachement du fil de liage précité est inférieure à celle desdits moyens de liaison 64, en l'occurrence des fils de couture.

Ainsi, dès lors qu'un filet élémentaire 1 est soumis à un effort, ce sont d'abord les parties non jointives de la sangle 6 qui vont être mises sous tension. Puis, si cet effort augmente, c'est une partie du fil de liage de la partie supérieure des brins 62A et 62B qui va céder en priorité.

Ceci est illustré symboliquement à la figure 6 sur laquelle on observe que les parties supérieures des brins 62A et 62B s'écartent l'un de l'autre.

Si l'effort demeure stable, la « séparation » de brins 62A et 62B s'arrête à ce stade.

En revanche, dès que l'effort augmente, la séparation des brins progresse et ainsi de suite.

Ainsi, chaque filet élémentaire 1 se meut en fonction des sollicitations qu'il subit, et ce progressivement et sans à-coups.

Bien entendu, sous réserve que le fil de liage précité cède totalement, alors les brins 62A et 62B ne sont plus contigus, de sorte que la totalité du tronçon intermédiaire 21 n'est plus relâché mais au contraire sous tension. Le dispositif de freinage F peut transmettre la totalité de l'effort de freinage aux filets élémentaires 1.

Dans la mesure où les sollicitations ne sont pas les mêmes pour tous les filets élémentaires 1, chacun se déplace indépendamment de l'autre, contribuant ainsi individuellement et conjointement à l'immobilisation de l'aéronef, sans affecter l'intégrité de ses parties fragiles.

A titre indicatif et comme illustré à la figure 7, la longueur l de chaque brin 62A et 62B est comprise entre 300 et 2000 millimètres, tandis que la longueur totale du tronçon intermédiaire 21 est comprise entre 1000 et 5000 millimètres.

Selon une caractéristique de l'invention, la longueur totale dudit tronçon intermédiaire relâché 21 est supérieure à la longueur de la sangle 6 une fois la déchirure complètement effectuée, en tenant compte de l'élasticité propre de la matière qui constitue les sangles unitaires de la sangle 6.

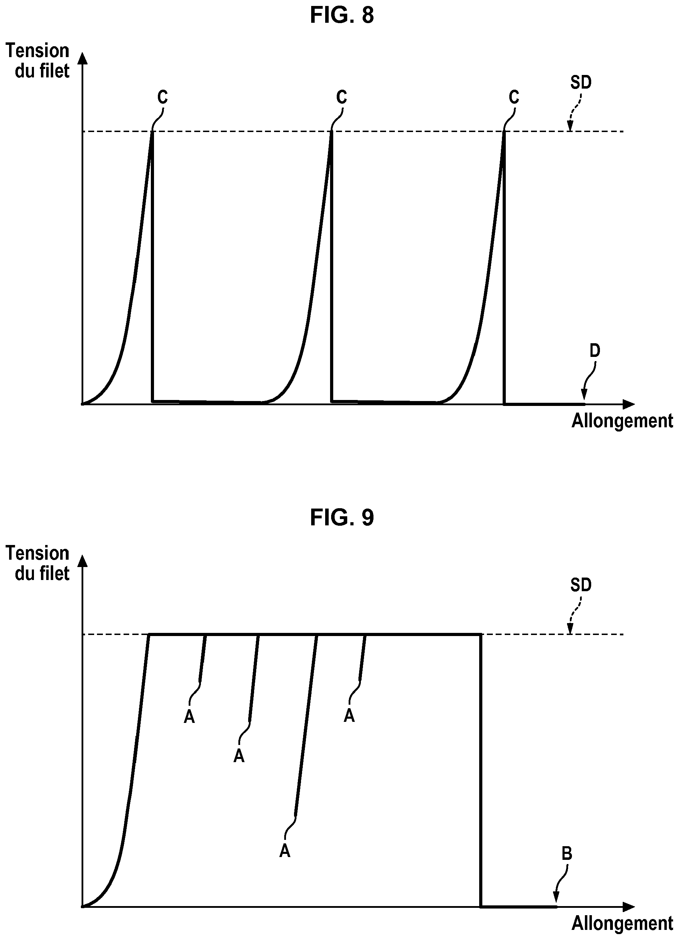

La figure 9 annexée illustre le comportement d'un filet d'une barrière selon l'invention, comparativement à un filet d'une barrière selon l'art antérieur de la figure 4, ainsi que cela est illustré à la figure 8.

Sur ces deux figures, on note en abscisse l'allongement du filet élémentaire 1 équipé de la sangle 6 et en ordonnée la progression de la tension à laquelle est soumise ce filet. De plus, la ligne en traits interrompus SD correspond au seuil de décharge, c'est-à-dire la tension au-delà de laquelle les brins 62A et 62B se séparent conformément à l'invention (respectivement les sangles 5A à 5C se rompent conformément à l'état de la technique).

A la figure 9, on constate que le filet 1 reste en permanence tendu et que toute diminution de tension stoppe la séparation des brins 62A et 62B. Le filet peut s'allonger continuellement sans jamais se détendre complètement. Les pertes de tension temporaires illustrées par la référence A correspondent à la prise en charge par d'autres filets élémentaires d'une partie de l'effort de freinage de la barrière. La référence B correspond au maximum d'allongement programmé du filet élémentaire, après que le fil de liage des brins 62A et 62B se soit complètement détaché.

A la figure 8, on constate que les trois pics C suffisent à consommer entièrement la réserve d'allongement de la sangle du filet élémentaire 1. La référence D correspond au maximum d'allongement programmé du filet élémentaire, après que les sangles 5A à 5C aient rempli leur fonction de « shunt ».

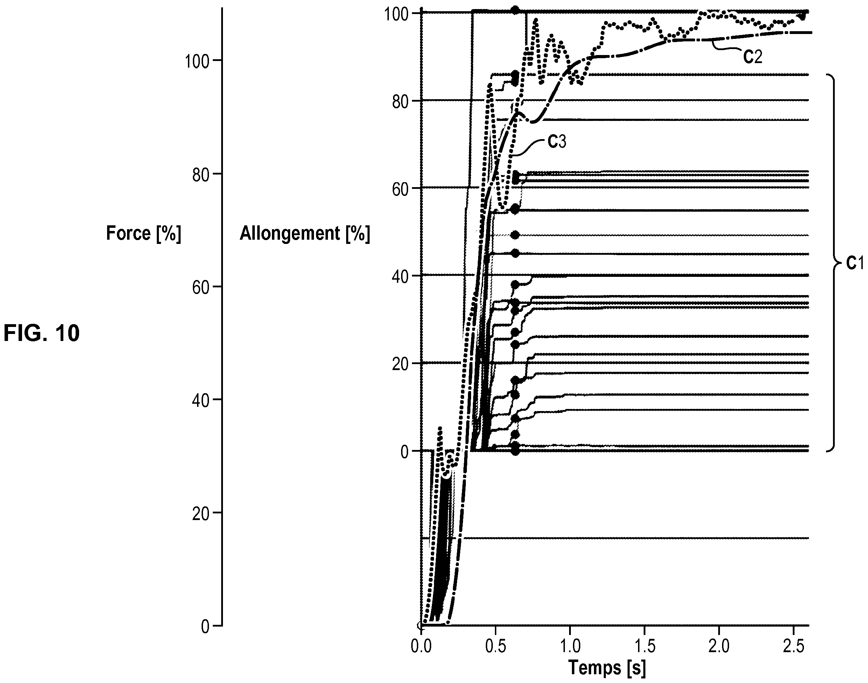

La figure 10 est tirée d'un test de simulation d'engagement, c'est-à-dire d'arrêt d'un avion (dont la vitesse et la masse connues donnent les forces exercées sur les filets élémentaires 1), qui montrent vingt-quatre séparations partielles et successives des brins 62A et 62B.

Chaque courbe C1 correspond à un filet élémentaire 1. En ordonnée figurent les allongements des filets, tandis qu'en abscisse figure le temps qui s'écoule pendant ces allongements.

La courbe C2 correspond à la somme des efforts de réaction d'ancrage au sol des dispositifs de freinage, les forces étant en ordonnées.

La courbe C3 correspond à la somme des forces d'appui des filets 1 sur l'avion, les forces étant en ordonnées également.

Plus précisément, sur une courbe C1, on peut constater un plateau de déplacement à 100%, ce qui correspond à la mise sous tension de la totalité du tronçon 21 après que le fil de liage précité se soit complètement déchiré. Cela s'opère en moins de 0.5 seconde.

Pour chaque autre courbe C1, on note de nombreux « micro-plateaux » successifs, ce qui correspond à des déchirures progressives du fil de liage jusqu'à 0.75 secondes, puis plus aucune déchirure (longueurs figées).

On note juste avant le dernier plateau que des déchirures sont toutes en cours à l'instant t = 0.7s. Cela signifie que les filets élémentaires ont presque tous des longueurs différentes à ce stade.

Autour de 0.7s, on note de nombreux micro-plateaux montrant que la charge est descendue sous le seuil de déchirure, et donc que les filets élémentaires se sont déchargés puisqu'ils ne s'allongent plus pendant une durée de quelques centièmes ou dixièmes de seconde.

## Revendications

1. Barrière d'arrêt (BA) pour un aéronef, qui comporte un ensemble de filets élémentaires (1) disposés parallèlement les uns aux autres, chaque filet élémentaire (1) comprenant une structure d'arrêt (10) généralement verticale qui s'étend entre une première sangle supérieure (2) et au moins une deuxième sangle inférieure (3), ces première et deuxième sangles (2,3) comprenant chacune deux portions (20,30) d'extrémité et de raccordement à un dispositif de freinage (F), et lesdites portions (20,30) d'extrémité de l'une et/ou l'autre desdites sangle supérieure (2) et inférieure(s) (3) comportant un tronçon intermédiaire relâché (21), c'est-à-dire qui n'est pas sous tension et qui forme une « sur-longueur », ladite barrière (BA) comportant une sangle additionnelle (6) dont les extrémités opposées (60,61) sont fixées par des moyens de liaison (64) aux extrémités correspondantes (210,211) dudit tronçon intermédiaire relâché (21), **caractérisée par le fait que** ladite sangle additionnelle (6) comprend une région (62) dans laquelle elle est constituée de deux brins (62A,62B) distincts et contigus, le fil de liage, c'est-à-dire le fil de trame ou de chaîne de cette sangle additionnelle (6) étant commun auxdits deux brins (62A, 62B), la résistance à l'arrachement dudit fil de liage étant inférieure à celle desdits moyens de liaison (64).

2. Barrière (BA) selon la revendication 1, **caractérisée par le fait que** lesdits moyens de liaison (64) comprennent des fils de couture, ou sont formés par collage ou assemblage par soudure à haute fréquence.

3. Barrière (BA) selon la revendication 2, **caractérisée par le fait que** lesdits fils de couture s'étendent sur une longueur d'au moins 50 millimètres.

4. Barrière (BA) selon l'une des revendications précédentes, **caractérisée par le fait que** la longueur totale dudit tronçon intermédiaire relâché (21) est supérieure à la longueur totale de ladite sangle additionnelle (6) lorsque lesdits brins (62A,62B) sont séparés.

## Patentansprüche

1. Stoppbarriere (BA) für ein Flugzeug, die eine Anordnung elementarer Netze (1) umfasst, die parallel zueinander angeordnet sind, wobei jedes elementare Netz (1) eine allgemein vertikale Stoppstruktur (10) umfasst, die sich zwischen einem ersten oberen Gurt (2) und mindestens einem zweiten unteren Gurt (3) erstreckt, wobei dieser erste und dieser zweite Gurt (2, 3) jeweils zwei End- und Verbindungsabschnitte (20, 30) mit einer Bremsvorrichtung (F) umfassen, und die Endabschnitte (20, 30) von dem einen und/oder dem anderen von dem oberen (2) und unteren (3) Gurt einen losen Zwischenabschnitt (21) aufweisen, das heißt, der nicht unter Spannung steht und der eine "Überlänge" bildet, wobei die Barriere (BA) einen zusätzlichen Gurt (6) aufweist, dessen gegenüberliegende Enden (60, 61) durch Verbindungsmittel (64) an den entsprechenden Enden (210, 211) des losen Zwischenabschnitts (21) befestigt sind, **dadurch gekennzeichnet, dass** der zusätzliche Gurt (6) einen Bereich (62) umfasst, in dem er aus zwei verschiedenen und aneinandergrenzenden Strängen (62A, 62B) besteht, wobei der Bindefaden, das heißt der Schussoder Kettfaden dieses zusätzlichen Gurts (6), den beiden Strängen (62A, 62B) gemeinsam ist, wobei die Ausreißfestigkeit des Bindefadens kleiner ist als der der Verbindungsmittel (64).

2. Barriere (BA) nach Anspruch 1, **dadurch gekennzeichnet, dass** die Verbindungsmittel (64) Nähfäden umfassen oder durch Kleben oder Hochfrequenzschweißverbindung gebildet sind.

3. Barriere (BA) nach Anspruch 2, **dadurch gekennzeichnet, dass** sich die Nähfäden über eine Länge von mindestens 50 Millimetern erstrecken.

4. Barriere (BA) nach einem der vorhergehenden Ansprüche, **dadurch gekennzeichnet, dass** die Gesamtlänge des losen Zwischenabschnitts (21) größer ist als die Gesamtlänge des zusätzlichen Gurts (6), wenn die Stränge (62A, 62B) getrennt sind.

## Claims

1. A crash barrier (BA) for an aircraft, which comprises an array of elementary nets (1) arranged parallel to each other, each elementary net (1) comprising a generally vertical stop structure (10) which extends between a first upper strap (2) and at least one second lower strap (3), these first and second straps (2,3) each comprising two end portions (20,30) for attaching to a braking device (F), and said end portions (20,30) of the one and/or the other of said upper (2) and lower (3) straps comprising a loosened intermediate section (21), that is, which is not tensed and which forms an "overlength", said barrier (BA) comprising an additional strap (6) of which the opposite ends (60,61) are fastened by linking means (64) to the corresponding ends (210,211) of said loosened intermediate section (21), **characterised in that** said additional strap (6) comprises a region (62) in which it is constituted by two distinct and contiguous strands (62A, 62B), the binding wire, that is, the weft or warp wire of this additional strap (6) being common to said two strands (62A, 62B), the pull-out resistance of said binding wire being less than that of said linking means (64).

2. The barrier (BA) according to claim 1, **characterised in that** said linking means (64) comprise sewing wires, or are formed by adhesion or assembly by highfrequency welding.

3. The barrier (BA) according to claim 2, **characterised in that** said sewing wires extend over a length of at least 50 millimetres.

4. The barrier (BA) according to one of the preceding claims, **characterised in that** the total length of said loosened intermediate section (21) is more than the total length of said additional strap (6) when said strands (62A, 62B) are separated.
